# EUROPEAN PATENT APPLICATION

(11) **EP 3 637 316 A1**
(43) Date of publication of application: **15.04.2020**
(21) Application number: 19821432.2
(22) Date of filing: 15.08.2019
(51) Int. Cl.: G06K 9/00

(54) **LCD FINGERPRINT RECOGNITION SYSTEM, UNDER-SCREEN OPTICAL FINGERPRINT RECOGNITION DEVICE, AND ELECTRONIC DEVICE**

(30) Priority: 15.08.2018 WO PCT/CN2018/100665; 24.08.2018 WO PCT/CN2018/102339; 25.07.2019 WO PCT/CN2019/097696
(71) Applicant: SHENZHEN GOODIX TECHNOLOGY CO., LTD., Shenzhen, Guangdong 518045 (CN)
(72) Inventor: QING, Xiaogang, Shenzhen, Guangdong 518045 (CN); LI, Shunzhan, Shenzhen, Guangdong 518045 (CN)
(74) Representative: J A Kemp LLP
(86) International application number: PCT/CN2019/100771
(87) International publication number: WO 2020/035021

(57) **Abstract**

The present application provides a liquid crystal display (LCD) fingerprint recognition system, including an under-screen optical fingerprint recognition apparatus disposed under an LCD screen, a fingerprint detection area of the under-screen optical fingerprint recognition apparatus is at least partially located in a display area of the LCD screen; the under-screen optical fingerprint recognition apparatus includes a fingerprint recognition module, which is disposed under a backlight module of the LCD screen and configured to receive fingerprint detection light which is formed by irradiating a finger above the fingerprint detection area by probe light emitted from the detection light source and carries fingerprint information; a wavelength of the fingerprint detection light is different from a wavelength of backlight provided by the backlight module for displaying a picture, and at least part area of the backlight module is a light transmission area capable of transmitting the fingerprint detection light, so that the fingerprint detection light passes through the backlight module and is transmitted to the fingerprint recognition module under the backlight module. The present application further provides an under-screen optical fingerprint recognition apparatus and an electronic apparatus.

## Description

The present application claims priority to PCT Patent Application No. PCT/CN2018/100665, filed to the International Bureau on August 15, 2018 and entitled "UNDER-SCREEN OPTICAL FINGERPRINT RECOGNITION SYSTEM, BACKLIGHT MODULE, DISPLAY SCREEN AND ELECTRONIC DEVICE", priority to PCT Patent Application No. PCT/CN2018/102339, filed to the International Bureau on August 24, 2018 and entitled "BACKLIGHT MODULE, UNDER-SCREEN FINGERPRINT RECOGNITION METHOD, APPARATUS AND ELECTRONIC DEVICE", and priority to PCT Patent Application No. PCT/CN2019/097696, filed to the International Bureau on July 25, 2019 and entitled "UNDER-SCREEN FINGERPRINT RECOGNITION MODULE, LCD OPTICAL FINGERPRINT RECOGNITION SYSTEM AND ELECTRONIC DEVICE". The content of the above applications that is relevant to the present application is hereby incorporated by reference in their entireties.

### TECHNICAL FIELD

The present application relates to the field of biological recognition and, in particular, to a fingerprint recognition system applicable to a liquid crystal display, a fingerprint recognition system of a liquid crystal display, and an electronic apparatus.

### BACKGROUND

When smart phones enter an era of full screen, the screen ratio of the phone is getting bigger and bigger, and under-screen fingerprint recognition technology has become a trend. At present, the optical under-screen fingerprint technology of a phone with an organic light-emitting diode (OLED) screen has entered a commercial era. The phone with the OLED screen adopts self-illumination of a pixel of the OLED screen as a light source. Light irradiates a finger to form fingerprint detection light, which returns to and penetrates the OLED screen and is received by an optical fingerprint sensor under the screen, so as to implement fingerprint image collection and fingerprint recognition.

Liquid crystal display (LCD) screens have many advantages such as thin body, power saving and no radiation, and thus are widely used in electronic products such as televisions, computers and mobile phones. LCD screens generally need a backlight module to illuminate a liquid crystal panel to display a picture.

However, when the finger presses the LCD screen, the fingerprint detection light formed on the finger generally cannot penetrate the backlight module to form an optical signal probe loop for the under-screen fingerprint, thus there are large technical difficulties in realizing the under-screen optical fingerprint recognition for the LCD screen.

### SUMMARY

The present application provides a liquid crystal display (LCD) fingerprint recognition system, an under-screen optical fingerprint recognition apparatus and an electronic apparatus to solve the problem that under-screen optical fingerprint recognition cannot be realized for the existing LCD screen.

A first aspect of the present application provides a liquid crystal display (LCD) fingerprint recognition system, including an under-screen optical fingerprint recognition apparatus disposed under an LCD screen, a fingerprint detection area of the under-screen optical fingerprint recognition apparatus is at least partially located in a display area of the LCD screen; the under-screen optical fingerprint recognition apparatus includes a fingerprint recognition module, which is disposed under a backlight module of the LCD screen and configured to receive fingerprint detection light which is formed by irradiating a finger above the fingerprint detection area by probe light emitted from a detection light source and carries fingerprint information; where a wavelength of the fingerprint detection light is different from a wavelength of backlight provided by the backlight module for displaying a picture, and at least part area of the backlight module is a light transmission area capable of transmitting the fingerprint detection light, so that the fingerprint detection light passes through the backlight module and is transmitted to the fingerprint recognition module under the backlight module.

In a specific embodiment of the present application, the fingerprint recognition module includes an optical element and a fingerprint sensor, where the optical element is configured to guide or converge the fingerprint detection light transmitted through the backlight module to the fingerprint sensor, and the fingerprint sensor is configured to receive the fingerprint detection light to obtain the fingerprint information of the finger.

In a specific embodiment of the present application, the fingerprint sensor includes an induction array, and an optical center of the optical element deviates from a center of the induction array of the fingerprint sensor or vertically aligned with a center of the induction array of the fingerprint sensor.

In a specific embodiment of the present application, the under-screen optical fingerprint recognition apparatus further includes the detection light source, the probe light emitted from the detection light source is invisible light of a specific wavelength, and the backlight provided by the backlight module is visible light.

In a specific embodiment of the present application, the detection light source is disposed under the backlight module together with the fingerprint recognition module, and the detection light source is disposed at a periphery of the fingerprint recognition module or integrated inside the fingerprint recognition module.

In a specific embodiment of the present application, the LCD screen further includes a display module having a protective cover plate and a liquid crystal panel, where the detection light source is disposed under an edge area of the protective cover plate.

In a specific embodiment of the present application, the invisible light of the specific wavelength is infrared light, the backlight module has a haze for the infrared light less than its haze for the visible light, and the backlight module has a reflectivity for the infrared light less than its reflectivity for the visible light.

In a specific embodiment of the present application, the backlight module includes a light homogenizing film for performing light homogenizing processing on the visible light, which includes a film body and infrared transmission particles distributed on the film body, where the infrared transparent particles are used for increasing a penetration rate of the light homogenizing film for the infrared light.

In a specific embodiment of the present application, the light homogenizing film has a haze of greater than 90% for the visible light, and has a haze of less than 30% for the infrared light.

In a specific embodiment of the present application, the backlight module further includes a reflective film for reflecting the visible light to the display module of the LCD screen; the reflective film includes a reflective film body and a partial-penetration partial-reflection film layer formed on a surface of the reflective film body, wherein the partial-penetration partial-reflection film layer is configured to reflect the visible light and transmit the infrared light.

In a specific embodiment of the present application, the reflective film has a transmittance of greater than 90% for the infrared light, and has a transmittance of less than 10% for the visible light.

In a specific embodiment of the present application, the backlight module further includes a brightness enhancement film for brightening the backlight provided by the backlight module, and the brightness enhancement film adopts a single layer prism film or a brightness enhancement film with a non-prism structure.

In a specific embodiment of the present application, the brightness enhancement film is a single layer prism film with a prism protrusion structure, and the prism protrusion structure includes two prism bevels, where the fingerprint detection light is incident on the backlight module at an inclined angle and passes through the prism film from only one of the prism bevels of the prism protrusion structure.

In a specific embodiment of the present application, the two prism bevels of the prism protrusion structure are asymmetric prism bevels.

In a specific embodiment of the present application, the fingerprint recognition module includes an optical element and a fingerprint sensor, where an optical center of the optical element deviates from a center of the induction array of the fingerprint sensor to enlarge a field of view of the fingerprint recognition module; where the optical element is configured to guide or converge the fingerprint detection light, which is incident at the inclined angle and passes through the backlight module, to the induction array of the fingerprint sensor.

In a specific embodiment of the present application, the optical element includes a macro lens and a micropore aperture, where the macro lens is configured to cooperate with the micropore aperture to obtain an enlarged field of view of the fingerprint recognition module to expand effective area of the fingerprint detection area, and enable optical imaging of the fingerprint detection light at the fingerprint sensor.

In a specific embodiment of the present application, the fingerprint recognition module further includes a visible light filter, where the visible light filter is disposed above the fingerprint sensor and configured to prevent the visible light from entering the fingerprint sensor, and a transmission wave band of the visible light filter covers the wavelength of the fingerprint detection light.

In a specific embodiment of the present application, the backlight module further includes a steel plate for supporting and protecting an optical film of the backlight module; where the fingerprint recognition module is disposed under the steel plate, and the steel plate is provided with a first opening in a corresponding area of the fingerprint recognition module, where the first opening is configured to make the fingerprint detection light be transmitted through the steel plate into the fingerprint recognition module.

In a specific embodiment of the present application, the steel plate further includes multiple second openings formed at a periphery of the first opening, and there are multiple detection light sources which are correspondingly disposed under the multiple second openings, where the second openings are configured to make the probe light emitted from the detection light source be transmitted through the steel plate and irradiate the finger above the LCD screen.

In a specific embodiment of the present application, the backlight module includes a light guide plate, and the light guide plate includes a backlight guide area and a transmission area, where the backlight guide area is configured to convert the visible light provided by the backlight source into planar light to illuminate the display module of the LCD screen, and the transmission area corresponds to a position of the fingerprint recognition module and is configured to transmit the fingerprint detection light to enable the fingerprint detection light to be transmitted to the fingerprint recognition module.

In a specific embodiment of the present application, the light guide plate includes light guide particles, where a density of the light guide particles in the transmission area is smaller than a density of the light guide particles in the backlight guide area, or the light guide plate has no light guide particle in the transmission area by.

In a specific embodiment of the present application, the backlight module further includes a backlight source, where the backlight source is disposed in a backlight source area of the backlight module and configured to provide visible light to the backlight module, where the backlight source area is under a non-display area of the LCD screen, and the detection light source is disposed in the backlight source area together with the backlight source.

In a specific embodiment of the present application, the detection light source and the backlight source are linearly arranged in the backlight source area, and the detection light source and the backlight source are alternately spaced apart from each other in a position near to the fingerprint detection area of the LCD screen and are connected to an external circuit through a same circuit board.

A second aspect of the present application provides an under-screen optical fingerprint recognition apparatus, which is applicable to a liquid crystal display (LCD) screen having a display module and a backlight module, where a fingerprint detection area of the under-screen optical fingerprint recognition apparatus is at least partially located in a display area of the LCD screen; the under-screen optical fingerprint recognition apparatus includes a fingerprint recognition module, which is disposed under the backlight module of the LCD screen and configured to receive fingerprint detection light which is formed by irradiating a finger above the fingerprint detection area by probe light emitted from a detection light source and carries fingerprint information; where a wavelength of the fingerprint detection light is different from a wavelength of backlight of the LCD screen for displaying a picture, and the fingerprint recognition module receives the fingerprint detection light through a light transmission area of the backlight module to obtain a fingerprint image of the finger, the light transmission area being capable of transmitting the fingerprint detection light.

In a specific embodiment of the present application, the fingerprint recognition module includes an optical element and a fingerprint sensor, where the optical element is configured to guide or converge the fingerprint detection light transmitted through the backlight module to the fingerprint sensor, and the fingerprint sensor is configured to receive the fingerprint detection light to obtain the fingerprint information of the finger.

In a specific embodiment of the present application, the fingerprint sensor includes an induction array, where the fingerprint detection light is incident on the backlight module at an inclined angle and passes through the backlight module, and an optical center of the optical element deviates from a center of the induction array of the fingerprint sensor to obtain an enlarged field of view and transmit the fingerprint detection light incident at the inclined angle to the induction array of the fingerprint sensor.

In a specific embodiment of the present application, an optical center of the optical element is vertically aligned with a center of the induction array of the fingerprint sensor.

In a specific embodiment of the present application, the optical element includes a macro lens and a micropore aperture, and the macro lens is configured to cooperate with the micropore aperture to obtain an enlarged field of view of the fingerprint recognition module to expand effective area of the fingerprint detection area, and enable optical imaging of the fingerprint detection light at the fingerprint sensor.

In a specific embodiment of the present application, the fingerprint recognition module further includes a visible light filter, where the visible light filter is disposed above the fingerprint sensor and configured to prevent visible light from entering the fingerprint sensor, and a transmission wave band of the visible light filter covers the wavelength of the fingerprint detection light.

In a specific embodiment of the present application, the under-screen optical fingerprint recognition apparatus further includes the detection light source, the probe light emitted from the detection light source is infrared light, and the backlight provided by the backlight module is visible light.

In a specific embodiment of the present application, the detection light source is disposed under the backlight module together with the fingerprint recognition module, and the detection light source is disposed at a periphery of the fingerprint recognition module or integrated inside the fingerprint recognition module.

In a specific embodiment of the present application, the detection light source is located under an edge area of a protective cover plate of the display module, where the detection light source is attached to a lower surface of the protective cover plate or is disposed at an internal support structure under the edge area of the protective cover plate.

In a specific embodiment of the present application, the backlight module has a haze for the infrared light less than its haze for the visible light, and the backlight module has a reflectivity for the infrared light less than its reflectivity for the visible light.

In a specific embodiment of the present application, the backlight module includes a light homogenizing film for performing light homogenizing processing on the visible light, which includes a film body and infrared transmission particles distributed on the film body, where the infrared transparent particles are used for increasing a penetration rate of the light homogenizing film for the infrared light, so that the light homogenizing film has a haze of greater than 90% for the visible light, and has a haze of less than 30% for the infrared light.

In a specific embodiment of the present application, the backlight module further includes a reflective film for reflecting the visible light to the display module of the LCD screen; the reflective film includes a reflective film body and a partial-penetration partial-reflection film layer formed on a surface of the reflective film body, where the partial-penetration partial-reflection film layer is configured to reflect the visible light and transmit the infrared light, so that the reflective film has a transmittance of greater than 90% for the infrared light, and has a transmittance of less than 10% for the visible light.

In a specific embodiment of the present application, the backlight module uses a single layer prism film with a prism protrusion structure as a brightness enhancement film, and the prism protrusion structure includes two prism slopes, where the fingerprint detection light is incident on the backlight module at an inclined angle and passes through the prism film from only one of the prism bevels of the prism protrusion structure.

In a specific embodiment of the present application, two prism bevels of the prism protrusion structure are asymmetric prism bevels.

In a specific embodiment of the present application, the backlight module further includes a steel plate for supporting and protecting an optical film of the backlight module; where the fingerprint recognition module is disposed under the steel plate, and the steel plate is provided with a first opening in a corresponding area of the fingerprint recognition module, where the first opening is configured to make the fingerprint detection light be transmitted through the steel plate into the fingerprint recognition module.

In a specific embodiment of the present application, the steel plate further includes multiple second openings formed at a periphery of the first opening, and there are multiple detection light sources which are correspondingly disposed under the multiple second openings, where the second openings are configured to make the probe light emitted from the detection light source be transmitted through the steel plate and irradiate the finger above the LCD screen.

In a specific embodiment of the present application, the backlight module includes a light guide plate, and the light guide plate includes a backlight guide area and a transmission area, where the backlight guide area is configured to convert the visible light provided by the backlight source into planar light to illuminate the display module of the LCD screen, and the transmission area corresponds to a position of the fingerprint recognition module and is configured to transmit the fingerprint detection light to enable the fingerprint detection light to be transmitted to the fingerprint recognition module.

In a specific embodiment of the present application, the light guide plate includes light guide particles, where a density of the light guide particles in the transmission area is smaller than a density of the light guide particles in the backlight guide area, or the light guide plate has no light guide particle in the transmission area.

A third aspect of the present application provides an electric apparatus, which includes: a liquid crystal display (LCD) screen having a display module and backlight module, and an optical fingerprint recognition apparatus disposed under the LCD screen, where the optical fingerprint recognition apparatus is the under-screen optical fingerprint recognition apparatus as described above.

In the LCD fingerprint recognition system, the under-screen optical fingerprint recognition apparatus and the electronic apparatus provided by the present application, the wavelength of the fingerprint detection light is different from the wavelength of the backlight provided by the backlight module for displaying a picture, and at least part area of the backlight module is the light transmission area capable of transmitting the fingerprint detection light, so the probe light emitted from the detection light source irradiates the finger above the LCD screen, and the fingerprint detection light formed on the finger can pass through the LCD screen and be received by the fingerprint recognition module to obtain the fingerprint image of the finger, thereby solving the problem that the under-screen optical fingerprint recognition cannot be performed for the traditional LCD screen.

### BRIEF DESCRIPTION OF THE DRAWINGS

In order to illustrate technical solutions in embodiments of the present application or in the prior art more clearly, the drawings used in description of the embodiments or the prior art will be briefly described below. Obviously, the drawings in the following description are some embodiments of the present application, and other drawings can be obtained by those skilled in the art according to these drawings without any creative effort.
FIG. 1 is a schematic structural diagram of an LCD fingerprint recognition system according to Embodiment 1;
FIG. 2 is a schematic structural diagram of a backlight module according to Embodiment 2;
FIG. 3 is a schematic structural diagram of a steel plate that can be used in the backlight module according to Embodiment 2 of the present application;
FIG. 4 is a schematic structural diagram of a light guide plate that can be used in the backlight module according to Embodiment 2 of the present application;
FIG. 5 is a schematic structural diagram of another light guide plate that can be used in the backlight module according to Embodiment 2 of the present application;
FIG. 6 is a schematic structural diagram of an arrangement of a detection light source according to Embodiment 3 of the present application;
FIG. 7 is a schematic structural diagram of an arrangement of a detection light source according to Embodiment 4 of the present application;
FIG. 8 is a schematic structural diagram of another arrangement of a detection light source according to Embodiment 4 of the present application; and
FIG. 9 is a schematic structural diagram of an LCD fingerprint recognition system according to Embodiment 6 of the present application.

### Illustration of reference signs:

display module-1;
protective cover plate -101;
liquid crystal panel -102;
backlight module-2;
steel plate-201;
first opening-2011;
second opening-2012;
reflective film-202;
light guide plate-203;
backlight guide area-2031;
transmission area-2032;
light guide particles-2033;
light homogenizing film-204;
brightness enhancement film-205;
backlight source-206;
backlight source area-207;
fingerprint recognition module-3;
fingerprint sensor-301;
visible light filter-302;
optical element-303;
detection light source-304.

### DETAILED DESCRIPTION OF THE EMBODIMENTS

To make the purposes, technical solutions and advantages of embodiments of the present application more clearly, the technical solutions in the embodiments of the present application are clearly and completely described in the following with reference to the accompanying drawings of the embodiments of the present application. Obviously, the described embodiments are part of embodiments of the application, not all embodiments. Based on the embodiments of the present application, all other embodiments obtained by those skilled in the art without creative effort are all within the protection scope of the present application.

The technical solutions of the present application are illustrated in detail below with specific embodiments. The following specific embodiments may be combined with each other, and the same or similar concepts or processes may not be repeated in some embodiments.

At present, OLED and LCD are display screens that are widely used in electronic apparatuses such as smart mobile terminals. OLED belongs to a current-type organic light-emitting device, and an electronic apparatus using an OLED screen can implement under-screen optical fingerprint detection. For example, an optical fingerprint sensor can be disposed under the OLED screen, and self-luminous pixels of the OLED screen can be used as fingerprint excitation light sources. The light emitted therefrom irradiates the finger and is reflected by the finger, and then the light is received by the optical fingerprint sensor under the OLED screen after passing through the screen of the mobile phone and an optical lens, so as to implement fingerprint image collection and fingerprint recognition.

LCD has many advantages such as thin body, power saving and no radiation, and thus is also widely used in electronic products such as televisions, computers and mobile phones. LCD is a passive light-emitting display, and its display panel does not emit light itself. Generally, a backlight module on the back of the display panel needs to be used to illuminate the display panel to display a picture. However, in order to realize a uniform surface light source, a backlight module of a conventional LCD screen needs to use an optical film, such as a light guide plate, a reflective film, a prism film, and a light homogenizing film, to perform processing on the backlight, such as light guiding, reflecting, brightening, and atomization and homogenizing. Therefore, the light reflected/transmitted by the finger cannot penetrate the backlight module to form an optical signal probe loop for the under-screen fingerprint, so that the above under-screen optical fingerprint implementations of the OLED screen cannot be directly applied to the LCD screen.

To this end, the present application provides an under-screen optical fingerprint recognition apparatus and a system that are applicable to an LCD screen to realize LCD under-screen optical fingerprint detection.

### Embodiment 1

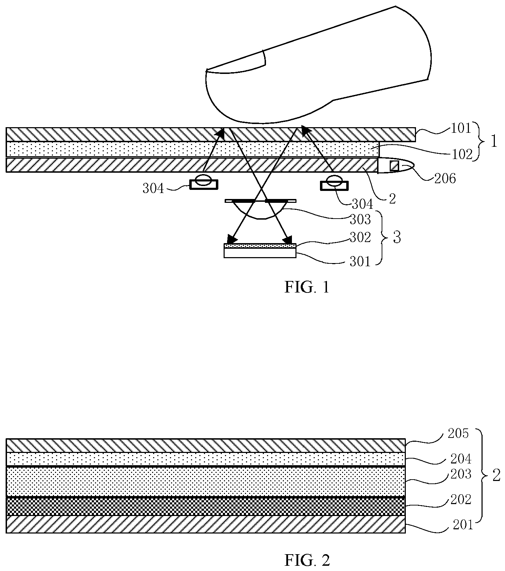

FIG. 1 is a schematic structural diagram of an LCD fingerprint recognition system according to Embodiment 1.

As shown in FIG. 1, an embodiment of the present application provides an LCD fingerprint recognition system, including an LCD screen and an under-screen optical fingerprint recognition apparatus disposed under the LCD screen. The LCD screen includes a display module 1 and a backlight module 2. The display module 1 includes a protective cover plate 101 and a liquid crystal panel 102, where the liquid crystal panel 102 may be a touch display panel with a touch detection function, and the protective cover plate 101 is disposed above the liquid crystal panel 102 for protecting the liquid crystal panel 102 and providing a man-machine interactive interface that could be operated by a finger of a user. The backlight module 2 is disposed under the display module 1 for providing a backlight source for the display module 1; the backlight module 2 includes a backlight source 206, and visible light emitted from the backlight source 206 is converted into a uniform surface light source by the backlight module 2 and irradiates the display module 1 to make it display a picture.

The under-screen optical fingerprint recognition apparatus can be specifically disposed under the backlight module 2 of the LCD screen, and a fingerprint detection area thereof is at least partially located within a display area of the display module 1, where the fingerprint detection area can be specifically an area for the user to perform a finger pressing to implement a fingerprint input operation. As an embodiment, the under-screen optical fingerprint recognition apparatus can include a detection light source 304 and a fingerprint recognition module 3; where the detection light source 304 may be specifically a light source having a different wave band from backlight (visible light) provided by the backlight module 2, and can be configured to transmit probe light of a specific wave band for the fingerprint recognition module 3 to perform under-screen optical fingerprint detection.

Specifically, the detection light source 304 can be specifically located under the backlight module 2, and disposed near the fingerprint recognition module 3 or integrated inside the fingerprint recognition module 3. The detection light source 304 can be configured to emit the probe light to the finger above the LCD screen, which is reflected or transmitted by the finger above the LCD screen to form fingerprint detection light carrying fingerprint information. The fingerprint detection light further passes through the LCD screen and returns to the fingerprint recognition module 3. To ensure that the probe light emitted from the detection light source 304 and the fingerprint detection light formed by the irradiation of the probe light on the finger can pass through the LCD screen, in this embodiment, at least part area of the backlight module 2 is a light transmission area capable of transmitting the fingerprint detection light. The light transmission area can be specifically an area corresponding to transmission paths, on the LCD screen, of the probe light and the fingerprint detection light formed by the probe light on the finger, and a transmission wave band thereof covers an emission wave band of the detection light source 304, so that the probe light and the fingerprint detection light formed by the probe light on the finger can penetrate the light transmission area of the backlight module 2. The fingerprint recognition module 3 is configured to receive the fingerprint detection light returning by passing through the light transmission area of the backlight module 2, and obtain a fingerprint image of the finger according to the fingerprint information carried by the fingerprint detection light.

In this embodiment, the probe light emitted from the detection light source 304 to the finger above the LCD screen and the visible light provided by the backlight module 2 are light of different wave bands, for example, the probe light of a specific wave band may be invisible light outside the visible light wave band, such as infrared light. That is to say, the user cannot see or perceive the above probe light for fingerprint recognition through the display module 1, and an optical signal for the display module 1 to display the image is the visible light of the backlight module 2. Therefore, the fingerprint recognition module 3 of the embodiment of the present application can not only implement under-screen optical fingerprint detection using the fingerprint detection light passing through the backlight module 2, but also reduce the interference from the probe light emitted from the detection light source 304 with the display effect of the LCD screen, and avoid affecting the display effect of the image.

In the present embodiment, the probe light emitted by the detection light source 304 may be an infrared light or other optical signal which wavelength is outside the visible light wave band and can implement fingerprint recognition. In the present embodiment, the probe light may include but is not limited to infrared light.

In the present embodiment, by setting a light transmission area that can transmit the probe light in the backlight module 2, so that the probe light emitted by the detection light source 304 is irradiated to the finger above the fingerprint detection region, and the fingerprint detection light formed after the reflection or transmission is reflected. Further, the light transmission area is transmitted to the fingerprint recognition module 3, thereby forming an under-screen optical fingerprint probe loop between the detection light source 304 and the fingerprint recognition module 3. The fingerprint recognition module 3 obtains the fingerprint image of the finger according to the fingerprint information carried by the fingerprint detection light.

As a preferred embodiment, in order to ensure that the fingerprint detection light formed on the finger can pass through the light transmission area of the backlight module 2, the position of the light transmission area should include at least an area within a range of a field of view of the fingerprint recognition module 3, that is to say, the range in which the light transmission area is located should include the maximum angle range in which the fingerprint recognition module 3 receives the fingerprint detection light. On the other hand, in the embodiment shown in FIG. 1, since the detection light source 304 is disposed under the backlight module 2 together with the fingerprint recognition module 3, the light transmission area of the backlight module 2 also needs to include a transmission path range of the probe light emitted from the detection light source 304 to the finger above the fingerprint detection area of the LCD screen, so that the probe light can smoothly irradiate the finger and form the corresponding fingerprint detection light.

In this embodiment, the fingerprint detection area 103 is located within the display area of the display module 1. Therefore, when the user needs to unlock the electronic apparatus or perform other fingerprint verification, he/she only needs to use a finger to press the fingerprint detection area located in the display module 1 to implement a fingerprint input operation.

In this embodiment, by setting the above light transmission area in the backlight module 2, a haze of the probe light provided by the detection light source and the fingerprint detection light formed by the probe light on the finger when passing through the backlight module 2 is less than a haze of the visible light provided by the backlight module 2 for displaying the image when passing through the backlight module 2, which could not only realize modulation of a visible light signal to form a uniform surface light source, but also effectively reduce the loss of a probe light signal in an optical path transmission.

Moreover, in this embodiment, by setting the above light transmission area in the backlight module 2, a reflectivity of the probe light provided by the detection light source and the fingerprint detection light formed by the probe light on the finger when passing through the backlight module 2 is less than a reflectivity of the visible light provided by the backlight module 2 for displaying the image when passing through the backlight module 2, which could not only effectively reduces the interference from the visible light with the fingerprint recognition, but also reduce the influence of the fingerprint detection light on the display effect of the image.

Further, although in the embodiment of FIG. 1, the detection light source 304 can be located under the backlight module 2, it should be understood that there is no specific limitation on the position and number of the detection light source 304 in the LCD fingerprint recognition system provided by the present application. For example, in other embodiments, the detection light source 304 may also be located at an end of a side of the backlight module 2 near the fingerprint module 1, for example, the detection light source 304 is disposed in a non-display area of the LCD screen together with the backlight source 206 of the backlight module 2. In another alternative embodiment, the detection light source 304 may also be disposed at an edge area under the protective cover plate 101. For example, referring to FIG. 1, the protective cover plate 101 can have an edge extension relative to the liquid crystal panel 102, and the edge extension can correspond to a chin area of an electronic apparatus such as a mobile smart terminal, which may be used as a wiring area of the liquid crystal panel 102, then the detection light source 304 may be disposed under the edge extension of the protective cover plate 101, and disposed side by side with a main body area of the liquid crystal panel 102 (i.e., do not overlap each other). Or, the detection light source 304 may also be disposed at other positions, which only needs to ensure that the probe light emitted from the detection light source 304 could irradiate the finger above the fingerprint detection area of the display module 1 and the fingerprint detection light formed by the reflection or transmission by the finger could enter the fingerprint recognition module 3 through the light transmission area of the backlight module 2.

Using the LCD fingerprint recognition system and the under-screen optical fingerprint recognition apparatus provided by the present application, the probe light emitted from the detection light source can irradiate the finger above the LCD screen, and the fingerprint detection light formed on the finger can pass through the LCD screen and be received by the fingerprint recognition module 3 to obtain the fingerprint image of the finger, thereby solving the problem that the under-screen optical fingerprint recognition cannot be performed for the traditional LCD screen.

### Embodiment 2

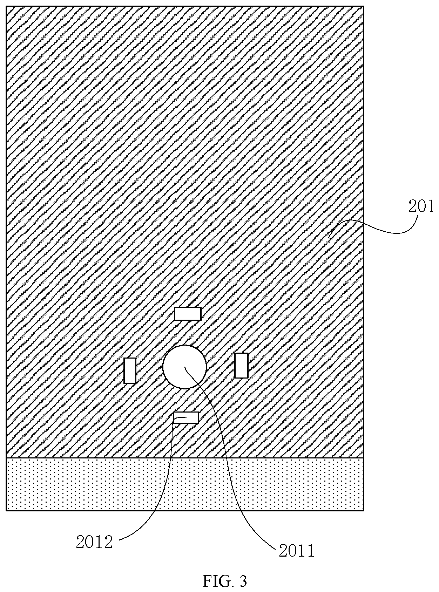

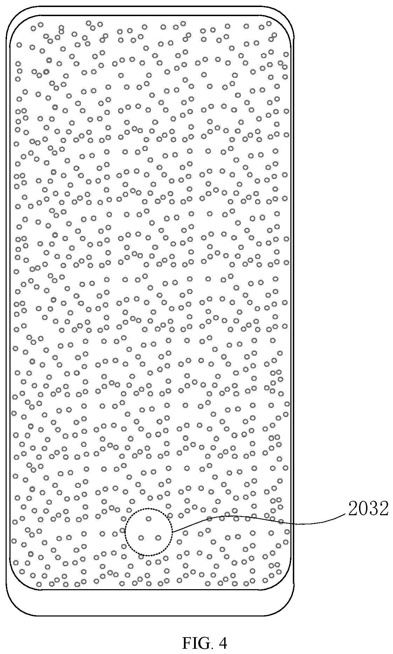

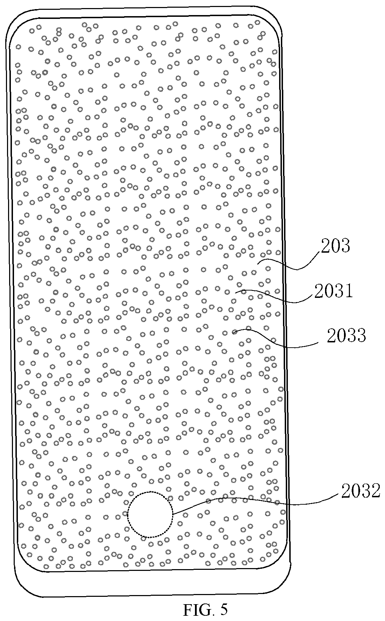

Based on the LCD fingerprint recognition system provided in Embodiment 1, the present application further provides a backlight module that can be applied to the above LCD fingerprint recognition system. Referring to FIG. 2 to FIG. 5, FIG. 2 is a schematic structural diagram of a backlight module according to Embodiment 2, FIG. 3 is a schematic structural diagram of a steel plate that can be used in the backlight module according to Embodiment 2 of the present application, FIG. 4 is a schematic structural diagram of a light guide plate that can be used in the backlight module according to Embodiment 2 of the present application, and FIG. 5 is a schematic structural diagram of another light guide plate that can be used in the backlight module according to Embodiment 2 of the present application.

Referring to FIG. 2, the backlight module 2 can be an optical film layer assembly which may, for example, specifically include a light guide plate 203, a light homogenizing film 204 and a brightness enhancement film 205 located on a light-exiting surface (i.e., a top surface) of the light guide plate 203, a reflective film 202 located on a bottom surface of the light guide plate 203, and a steel plate disposed at a lowest portion of the backlight module 2. In addition, the backlight module 2 can further include a backlight source 206 as shown in FIG. 1, and the backlight source 206 can be specifically disposed on one side surface of the light guide plate 203, that is, the side surface of the light guide plate 203 facing the backlight source 206 serves as a light-incident surface. The light guide plate 203 is mainly configured to receive the visible light provided by the backlight source 206 through the light-incident surface, and convert the visible light into uniform planar light and emit it from the light-exiting surface; the reflective film 202 is mainly configured to reflect the visible light emitted from the bottom surface of the light guide plate 203 back to the light guide plate 203; the light homogenizing film 204 and the brightness enhancement film 205 are mainly configured to perform light homogenizing diffusion and brightening processing on the planar light emitted from the light-exiting surface of the light guide plate 203. The steel plate 201 is mainly configured to support and protect other optical films of the backlight module 2.

On the basis of the above embodiment, as shown in FIG. 3, the steel plate 201 forms a first opening 2011 at a position corresponding to the fingerprint recognition module 3, so that the fingerprint detection light formed on the finger can pass through the backlight module 2 and enter the fingerprint recognition module 3, and can be received by the fingerprint recognition module 3 to obtain a fingerprint image of the finger.

In this embodiment, as shown in FIG. 1, the fingerprint recognition module 3 can be specifically located under the first opening 2011 of the steel plate 201, and the fingerprint recognition module 3 is configured to receive the fingerprint detection light which is formed after the probe light emitted from the detection light source 304 irradiates the human finger and returns and then passes through the first opening 2011. Therefore, the shape and size of the first opening 2011 can satisfy the condition that the fingerprint detection light can be basically transmitted, so as to avoid the acquisition of the fingerprint image from being affected by the case in which the fingerprint detection light cannot pass through the steel plate 201. In this embodiment, the size of the first opening 2011 is subject to a receiving optical path of the fingerprint recognition module 3.

On the other hand, in this embodiment, as shown in FIG. 3, the steel plate 201 can further form a second opening 2012 at a position corresponding to the detection light source 304, and the specific position and number of the second opening 2012 correspond to the detection light source. For example, in an embodiment, the detection light source 304 specifically includes four light sources, which are respectively disposed in four surrounding areas of the fingerprint recognition module 3 (such as front, behind, left and right); correspondingly, as shown in FIG. 3, the steel plate 201 can have four second openings 2012 respectively in the four surrounding areas of the first opening 2011. The shape and size of the second opening 2012 are designed to satisfy that the probe light emitted from the four detection light sources 304 can be transmitted respectively through the corresponding second openings 2012 to irradiate the finger above the fingerprint detection area of the display module 1.

In this embodiment, the reflective film 202 can be specifically a partial-penetration partial-reflection film which can transmit the probe light and the fingerprint detection light formed by the probe light on the finger and can reflect the visible light. For example, the reflective film 202 can be a partial-penetration partial-reflection film which can be penetrated by a specific invisible light wave band (i.e., the wave band of the probe light and the corresponding fingerprint detection light wave band) and can reflect the visible light wave band (i.e., the wave band of the backlight). The reflective film 202 is located on the side of the steel plate 201 away from the fingerprint recognition module 3. In this embodiment, by using the above reflective film 202, not only could the interference from the visible light, which is provided by the backlight module 2 and emitted from below, with the optical fingerprint detection of the fingerprint recognition module 3 be effectively avoided, improving the quality of fingerprint recognition, but also the loss of the probe light emitted from the detection light source 304 and the fingerprint detection light, which is formed by the probe light on the finger and returns, in the optical path transmission could be reduced, and the influence of the fingerprint detection light on the display effect of the image could be effectively reduced.

In this embodiment, the reflective film 202 can specifically include a reflective film body. On a surface of the reflective film body, a partial-penetration partial-reflection film layer which can be penetrated by a specific invisible light wave band (such as an infrared wave band used by the probe light) and can reflect the visible light wave band used by the backlight can be formed by coating or other processes. Using this film layer, on the one hand, the probe light emitted from the detection light source 304 through the second opening 2012 can penetrate the reflective film 202 to irradiate the finger above the fingerprint detection area of the display module 1, and the fingerprint detection light (consistent with the wavelength of the probe light) which is formed by the reflection or transmission by the finger and carries the fingerprint information returns from the display module 1 and enters into the backlight module 2, and is then received by the fingerprint recognition module 3 under the first opening 2011 after passing through the reflective film 202; on the other hand, the backlight (visible light) provided by the backlight module 2 cannot pass through the reflective film 202 to reach the fingerprint recognition module 3 under the backlight module 2, but is reflected back to the light guide plate 203 to illuminate the display module 1. That is to say, using the above film layer, the reflective film 202 has a transmittance for the probe light and the fingerprint detection light formed by the probe light on the finger much higher than its transmittance for the visible light, and has a reflectivity for the visible light much higher than its reflectivity for the probe light and the fingerprint detection light.

As an optional solution, in this embodiment, the transmittance of the reflective film 202 for the probe light and the fingerprint detection light formed by the probe light on the finger is greater than 90%, and the transmittance for the visible light is less than 10%.

In this embodiment, as shown in FIG. 4 and FIG. 5, the light guide plate 203 of the backlight module 2 is specifically a light guide plate which can be penetrated by the probe light and the fingerprint detection light formed by the probe light on the finger.

As shown in FIG. 4 and FIG. 5, in order to ensure the accuracy of the recognition of the fingerprint recognition module 3, the light guide plate 203 can define a backlight guide area 2031 and a transmission area 2032; the backlight guide area 2031 is used for converting the visible light provided by the backlight source 206 into planar light emitted from the light-exiting surface of the light guide plate 203 near the display module 1 to illuminate the display module 1, so as to ensure that the backlight module 2 can provide backlight normally. The transmission area 2032 is mainly used for the fingerprint detection light which is formed on the finger and carries the fingerprint information to smoothly pass through the light guide plate 2 and enter the fingerprint recognition module 3, so as to realize the fingerprint recognition, and avoid the fingerprint detection light carrying the fingerprint information from being unable to enter the fingerprint recognition module 3 normally due to the influence from the optical path guidance of the light guide plate 203, thereby causing distortion of the fingerprint image.

Optionally, in a specific embodiment, the fingerprint recognition module 3 can be at least partially located vertically under the transmission area 2032 of the light guide plate 203; or the transmission area 2032 of the light guide plate can be set as deviating from the fingerprint recognition module 3, so that the fingerprint recognition module 3 can receive the fingerprint detection light which has the inclined angle and is received through the transmission area 2032 of the light guide plate 203, that is, the fingerprint detection light whose incident angle is greater than or equal to a preset angle is received. The above setting is to make the fingerprint detection light which is received by the fingerprint recognition module 3 and carries the fingerprint information has a low degree of distortion.

In this embodiment, as shown in FIG. 4 and FIG. 5, the light guide plate 203 includes light guide particles 2033, which are also referred to as light guiding dots, and can be disposed on the bottom surface or other areas of the light guide plate 203. In the embodiment shown in FIG. 4, the density of the light guide particles 2033 in the transmission area 2032 is smaller than the density of the light guide particles 2033 in the backlight guide area 2031; or, in the embodiment shown in FIG. 5, the light guide particles 2033 of the light guide plate 203 are disposed only in the light guide area, and there are no light guide particles 2033 disposed in the transmission area 2032, so as to increase the transmittance of the fingerprint detection light in the transmission area 2032.

In this embodiment, as shown in FIG. 4 and FIG. 5, the light guide particles 2033 can serve as a backlight guide structure of the light guide plate 203. When the visible light emitted from the backlight source 206 enters the light guide plate 203 and irradiates the light guide particles 2033, the visible light will diffuse at all angles and destroy the reflection condition, so the visible light will be guided to be emitted from the light-exiting surface of the light guide plate 203 to illuminate the display module 1, so as to ensure that the backlight module 2 could provide the backlight normally.

In this embodiment, the light guide particles 2033 may be small particles, such as plastic particles or high reflective particles, which could change light and diffuse the light at all angles.

In this embodiment, the light homogenizing film 204 can be located on a side of the light guide plate 203 near the display module 1, that is, being disposed near the light-exiting surface of the light guide plate 203. The haze of the light homogenizing film 204 for invisible light of a specific wave band is smaller than the haze for the visible light, so that the probe light emitted from the detection light source 304 and the fingerprint detection light formed by the probe light on the finger can pass though the light homogenizing film 204 smoothly when being transmitted to the light homogenizing film 204, and the backlight emitted from the light guide plate 203 of the backlight module 2 will be subjected to light homogenizing or diffusion processing to form relatively uniform planar light when being transmitted to the light homogenizing film 204.

In this embodiment, the light homogenizing film 204 includes a film body, and infrared transmission particles (not marked in the figure) distributed on the film body. The infrared transmission particles are mainly used for improving the transmittance of the light homogenizing film 204 for the probe light emitted from the detection light source 304 and the fingerprint detection light formed by the probe light on the finger, thereby reducing the loss of the fingerprint detection light carrying the fingerprint information in the optical path transmission as much as possible. In a specific embodiment, the infrared transmission particles can adopt particulate matter that is made of a material with a high infrared light transmittance, where the material with the high infrared light transmittance may include, for example, glass, ceramic, plastic, diamond, and diamond-like carbon and the like. In this embodiment, the material for the infrared transmission particles may not be further limited.

In this embodiment, the wavelengths of the infrared light and the visible light respectively used by the probe light and the backlight are different, and the infrared transmission particles are disposed and distributed on the film body of the light homogenizing film 204, thus the light homogenizing film 204 can transmit the infrared light and perform atomization and light homogenizing for the visible light. For example, the haze of the light homogenizing film 204 for the visible light can be greater than 90%, and the haze for the infrared light can be less than 30%, thereby increasing the transmittance of the light homogenizing film 204 for the fingerprint detection light while reducing the influence on the display effect by the display module 1.

In this embodiment, the brightness enhancement film 205 can be disposed above the light homogenizing film 204, or under the light homogenizing film 204; and the brightness enhancement film 205 can be specifically a single layer prism film, or the brightness enhancement film 205 is a brightness enhancement film 205 without a prism structure.

The single layer prism film can include a film substrate and a prism protrusion structure formed on a surface of the film substrate, where the prism protrusion structure can include two prism bevels, and the two prism bevels may be asymmetric prism bevels; in a specific embodiment, through an optical path design, the fingerprint detection light formed by the probe light irradiating the finger returns at a certain inclined angle and is received by the fingerprint detection module 3, and in the process of the fingerprint detection light being transmitted to the backlight module 2, the fingerprint detection light passes through only one of the prism bevels of the single layer prism film, so as to avoid the distortion of the fingerprint image or other interference caused by simultaneous refraction or other optical path modulation of two prism bevels for the fingerprint detection light and their superposition.

The backlight module of the conventional LCD screen generally adopts a double layer prism film as a brightness enhancement film. The double layer prism film usually has two layers of prism films arranged vertically up and down, which improves the display brightness of the LCD screen mainly by limiting the light-emitting angle. But when the double layer prism film is applied in the scenario of the under-screen optical fingerprint detection, the double layer prism film will make the fingerprint detection light incident at a small angle be unable to penetrate and result in that an image center area of the fingerprint recognition module does not have any fingerprint signal. In this embodiment, the single layer prism film is used as the brightness enhancement film 205, and the fingerprint detection light is obliquely incident from only one of the prism bevels through the optical path design, the penetration rate of the fingerprint detection light at various incident angles in the brightness enhancement film 205 can be improved, thereby improving the accuracy and integrity of the fingerprint image. In addition, the use of the single layer prism film as the brightness enhancement film 205 in this embodiment can also reduce the manufacturing cost of the backlight module 2 and the LCD fingerprint recognition system.

As an alternative embodiment, the brightness enhancement film 205 can also be realized using a film of a non-prism film structure. For example, the brightness enhancement film 205 can include a film substrate and a brightness enhancing material or microstructure distributed on the film substrate. The brightness enhancing material or microstructure is primarily used for increasing the brightness of the visible light transmitted to the brightness enhancement film 205, but will not cause significant interference with the fingerprint detection light passing through the brightness enhancement film.

### Embodiment 3

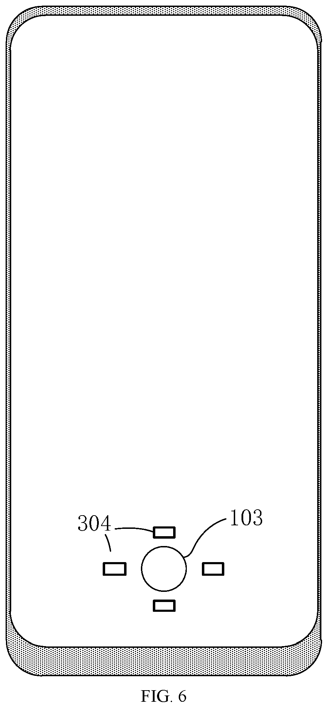

FIG. 6 is a schematic structural diagram of an arrangement of a detection light source according to Embodiment 3 of the present application.

In this embodiment, as described above, the detection light source 304 is specifically an infrared light source, and the probe light emitted therefrom is infrared light. Therefore, the fingerprint detection light which is formed by the probe light irradiating the finger and being reflected or transmitted on the finger is also infrared light.

The detection light source 304 may be an infrared light source such as an infrared lamp, an infrared vertical cavity surface emitting laser (VCSEL), or an infrared laser diode.

In this embodiment, the spectral range of the probe light emitted from the detection light source 304 may be 780 nm to 1100 nm. Preferably, it may be 850 nm or 940 nm or the like. In this way, different characteristics of the visible light and the infrared light in various backlight films of the backlight module 2 can not only ensure uniformity of the backlight, but also ensure that the fingerprint detection light carrying the fingerprint information is less distorted in the transmission process in the backlight module 2, and ensure high accuracy of the fingerprint recognition. On the other hand, by using the infrared light emitted from the detection light source 304 as the probe light, since the penetrating ability of the infrared light is stronger than that of the visible light, the signal of the fingerprint detection light penetrating the LCD screen and the backlight films thereof can be more effectively enhanced, thereby improving the effect of the fingerprint recognition.

In the specific embodiment, the detection light source 304 includes one or more detection light sources 304. In the embodiment shown in FIG. 6, the number of the detection light sources 304 is preferably but not limited to 4.

In this embodiment, the detection light source 304 is located on a side of the backlight module 2 near the fingerprint recognition module 3, and as shown in FIG. 3, the steel plate 201 is provided with the second opening 2012 at the position corresponding to the detection light source 304. The detection light source 304 is correspondingly disposed under the second opening 2012, so that the probe light emitted from the detection light source 304 can smoothly pass through the steel plate 01.

As an embodiment, as shown in FIG. 1 and FIG. 6, multiple detection light sources 304 surround the fingerprint detecting area 103, and are uniformly distributed under the backlight module 2 and near the fingerprint recognition module 3, so that the probe light emitted from multiple detection light sources 304 can pass through the LCD screen and irradiate the finger above the fingerprint detection area for fingerprint recognition.

### Embodiment 4

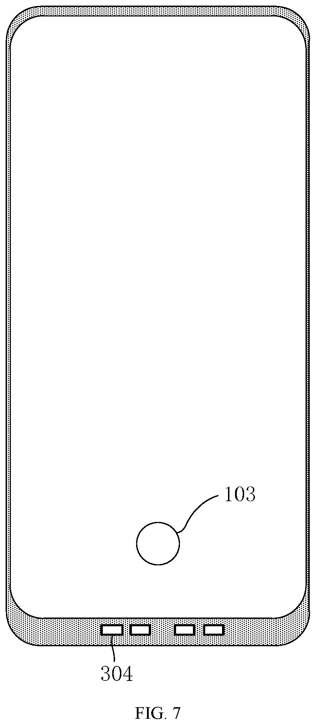

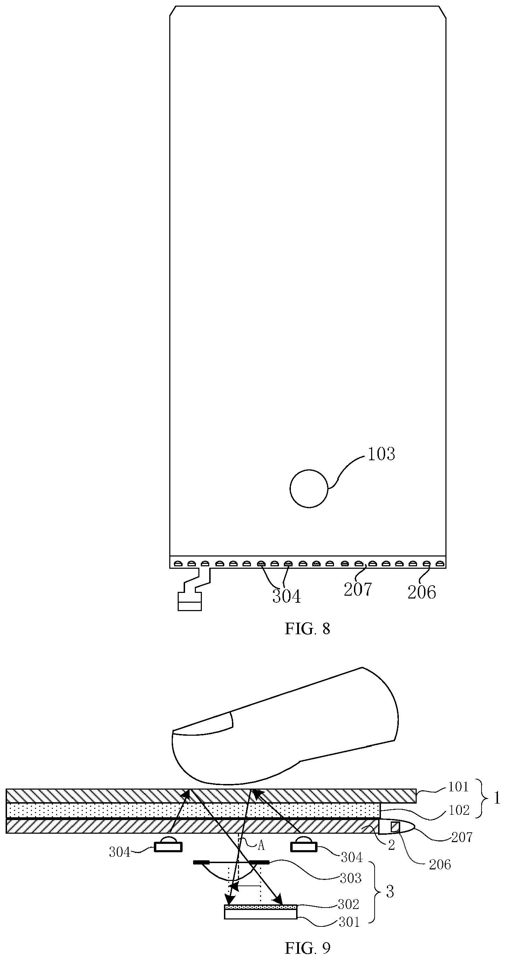

FIG. 7 is a schematic structural diagram of an arrangement of a detection light source according to Embodiment 4 of the present application, and FIG. 8 is a schematic structural diagram of another arrangement of a detection light source according to Embodiment 4 of the present application.

The difference between this embodiment and the above embodiments lies in that the position of the detection light source 304 is different. As shown in FIG. 7 and FIG. 8, in this embodiment, the detection light source 304 is located in a non-display area at an end of the LCD screen near the fingerprint recognition module 3, such as a below area. For example, in the embodiment shown in FIG. 7, multiple detection light sources 304 can be disposed under an edge area of the protective cover plate 101. Or, as shown in FIG. 8, multiple detection light sources 304 can be disposed and integrated in a backlight source area 207 of the backlight module 2. For example, the backlight source area 207 can be located near the light-incident surface of the light guide plate 203 of the backlight module 2, and located in the non-display area of the LCD screen; multiple detection light sources 304 and the backlight sources 206 are disposed in the backlight source area 207, where the detection light sources 304 and the backlight sources 206 are alternately spaced apart from each other in a position near to the fingerprint detection area of the LCD screen, and the both can also connect to an external circuit through the same circuit board.

In the embodiment shown in FIG. 7 and FIG. 8, multiple detection light sources 304 are linearly arranged in the non-display area of the LCD apparatus, such as the edge area of the protective cover plate 101 or the backlight source area 207. In other alternative embodiments, at least one of the detection light sources 304 and the backlight sources 206 can also be integrated in a non-parallel manner.

In this embodiment, when the detection light source 304 is located under the edge area of the protective cover plate 101, the detection light source 304 can be glued to the lower surface of the protective cover plate 101 by optical glue or disposed on an edge supporting component of the electronic apparatus. The optical glue can be any optical liquid glue or optical solid glue. In this embodiment, the optical refractive index of the optical glue and the optical refractive index of the protective cover plate 101 are the same or similar, thereby the utilization rate of the probe light emitted from the detection light source 304 can be improved as much as possible.

It should be noted that, in this embodiment, the detection light source 304 may also adopt other setting manners, for example, part of the detection light sources 304 may be disposed under the backlight module 2 and located at the periphery of the fingerprint recognition module 3 as shown in FIG. 6, and part of the detection light sources 304 may be disposed in the non-display area of the LCD screen as shown in FIG. 7 or FIG. 8, that is, the setting manner of the detection light source 304 in this embodiment includes, but is not limited to, the three setting manners mentioned in Embodiment 3 and Embodiment 4.

### Embodiment 5

Further, on the basis of the above embodiments, as shown in FIG. 1, the fingerprint recognition module 3 can include a fingerprint sensor 301 and an optical element 303. The optical element 303 is located on a side of the fingerprint sensor 301 facing the backlight module 2, and the optical element 303 is disposed at a position corresponding to the fingerprint sensor 301, that is, the optical center of the optical element 303 is vertically aligned with the center of an induction array of the fingerprint sensor 301, so that the fingerprint detection light can undergo the optical path guide or optical converge of the optical element 303 after passing through the backlight module 2 and enter the fingerprint sensor 301 to implement optical imaging of the fingerprint image.

The fingerprint sensor 301 can also be referred to as an optical sensor, an image sensor, an optical fingerprint sensor 301, an optical inductor or a fingerprint detection sensor, etc. The fingerprint sensor 301 can specifically include an optical imaging chip or an optical imaging chip having a certain optical laminate, and has an induction array for receiving the fingerprint detection light and performing photoelectrical conversion on the fingerprint detection light.

As shown in FIG. 1, the optical element 303 can include: a macro lens having at least one spherical or aspherical lens; and a physical component for bearing the macro lens. The optical element can also include other optical components, such as at least one micropore aperture. The at least one lens can be formed of a resin material or a glass material, and configured to converge the fingerprint detection light passing through the LCD screen to the fingerprint sensor 301, and cooperate with the micropore aperture to form an enlarged field of view of the fingerprint recognition module 3 to expand effective area of the fingerprint detection area, thereby improving the accuracy of the fingerprint recognition.

In addition, in this embodiment, as shown in FIG. 1, the fingerprint recognition module 3 further includes a visible light filter 302, and the visible light filter 302 is located between the fingerprint sensor 301 and the optical element 303 O On the one hand, the visible light filter 302 can be configured to filter out the visible light transmitted to the visible light filter 302 to prevent the backlight of the backlight module 2 and other environmental interference light from entering the fingerprint sensor 301 through the opening of the steel plate 201 to interfere with the fingerprint imaging; on the other hand, the transmission wave band of the visible light filter 302 covers the emission wave band of the detection light source 304, such that the fingerprint detection light can pass through the visible light filter 302 and enter the fingerprint sensor 301.

In this embodiment, if the probe light emitted from the detection light source 304 is infrared light, the visible light filter 302 can be specifically an infrared filter layer, and the infrared filter layer can cut off the light of other wave bands except the infrared light through a filter.

This visible light filter 302 can specifically include one or more optical filters, and the one or more optical filters can be configured as, for example, a band-pass filter to filter out the visible light while transmitting the infrared light. The one or more optical filters can be implemented, for example, by an optical filter coating formed on one or more continuous interfaces, or on one or more discrete interfaces.

It should be understood that the visible light filter 302 can also be disposed at other positions. For example, in other alternative embodiments, the visible light filter 302 can be made on a surface of any optical component of the fingerprint recognition module 3, or disposed on an optical path, on which the fingerprint detection light formed by the probe light irradiating the finger is transmitted to the fingerprint recognition module 3, in the LCD fingerprint recognition system. For example, the visible light filter 302 can be disposed between the steel plate 201 and the fingerprint recognition module 3, or the visible light filter 302 can be attached to the bottom surface of the display module 1, a surface of the steel plate 201, or the inside of the fingerprint recognition module 3.

### Embodiment 6

FIG. 9 is a schematic structural diagram of an LCD fingerprint recognition system according to Embodiment 5 of the present application.

In the embodiment shown in FIG. 9, the brightness enhancement film 205 of the backlight module 2 can adopt the above single layer prism film. In order to enable the fingerprint sensor 301 of the fingerprint module 3 to obtain the fingerprint image, the optical element 303 is disposed in parallel between the backlight module 2 and the fingerprint sensor 301 in this embodiment; and the optical center of the optical element 303 deviates from the center of the induction array of the fingerprint sensor 301. That is to say, the projection of the optical element 303 in the vertical direction deviates from the induction area of the fingerprint sensor 301, so that the fingerprint detection light can also be incident on the fingerprint induction module 3 at an inclined angle, and a field of view of the optical element 303 is greater than a preset angle, such as greater than a field of view when the optical element 303 and the fingerprint sensor 301 shown in FIG. 1 are vertically aligned with each other. Therefore, the fingerprint sensor 301 can receive the fingerprint detection light to obtain the fingerprint image corresponding to the fingerprint detection light.

In this embodiment, in order to obtain a sufficiently large field of view angle, the angle between the edge light received by the fingerprint sensor 301 from the optical element 303 and the vertical direction can be at least 35 degrees, or can be any value between 35 degrees to 80 degrees.

It should be noted that, in the case where the optical center of the optical element 303 is vertically aligned with the center of the induction area of the fingerprint sensor 301 (as shown in FIG. 1), in the embodiment shown in FIG. 9, when the projection of the optical element 303 in the vertical direction deviates from the induction area of the fingerprint sensor 301, the fingerprint sensor 301 can receive the fingerprint detection light obliquely incident from one of the prism faces of the single layer prism film, so the fingerprint image obtained based on the fingerprint detection light can eliminate the phenomenon that the fingerprint image is divided from the middle, that is, the fingerprint image with better imaging effect is obtained.

### Embodiment 7

Further, based on the above embodiments, an embodiment of the present application provides an electronic apparatus, and the electronic apparatus includes any one of the LCD fingerprint recognition systems of the above embodiments.

The LCD fingerprint recognition system can include the LCD screen and the under-screen optical fingerprint recognition apparatus, where the display module 1 of the LCD screen includes the liquid crystal panel 102 and the protective cover plate 101 located above the liquid crystal panel 102. The protective cover plate 101 can be a transparent cover plate, such as a glass cover plate or a sapphire cover plate, and is located above the liquid crystal panel 102 and covers the front of the electronic apparatus. A surface of the protective cover plate 101 can also be provided with a protective layer. Therefore, in the embodiment of the present application, the finger pressing the fingerprint detection area of the display module 1 may actually refer to the finger pressing the protective cover plate 101 above the liquid crystal panel 102 or the surface of the protective layer covering the protective cover plate 101.

In this embodiment, the electronic apparatus may specifically be an electronic product or component having an LCD screen, such as a mobile phone, a tablet computer, a television, a notebook computer, a digital photo frame, a navigator, a fingerprint lock, etc.

In this embodiment, the electronic apparatus can obtain the fingerprint information of the user based on the LCD fingerprint recognition system, and can further perform fingerprint matching verification, thereby completing the identity verification of the current user so as to confirm whether the user has the right to perform the corresponding operation on the electronic apparatus..

In the description of the present application, it should be noted that unless otherwise specified and defined clearly, the terms "installation", "connection", and "connected" are to be understood broadly, which may be, for example, a fixed connection, or indirect connection via an intermediate medium, or internal connection of two components, or interaction relationship between two components. For those skilled in the art, the specific meanings of the above terms in the present application can be understood according to specific conditions.

In the description of the present application, it should be understood that the orientation or positional relationship indicated by the terms such as "upper", "lower", "front", "behind", "vertical", "horizontal", "top", "bottom", "inside", "outside" is based on the orientation or positional relationship shown in the drawings, and is only for convenience of description of the present application and for simplifying the description, rather than indicating or implying that the apparatus or element referred to must have a specific orientation, be constructed and operated in a specific orientation, which thus should not be understood as limitations of the present application. In the description of the present application, the meaning of "multiple" is two or more unless it is specified precisely and specifically.

The terms "first", "second", "third", "fourth" and the like (if exiting) in the description, claims, and the drawings of the present application are used for distinguishing similar objects, rather than describing a specific order or sequence. It should be understood that the data used in this way can be interchanged where appropriate, such that the embodiments of the present application described here can be implemented, for example, in a sequence other than those illustrated or described here. In addition, the terms "include" and "have" and any variations thereof are intended to cover a non-exclusive inclusion, for example, processes, methods, systems, products or devices that each include a series of steps or units do not have to be limited to those steps or units that are clearly listed, instead, other steps or units which are not explicitly listed or are inherent to such processes, methods, products or devices may be included.

Finally, it should be noted that the above embodiments are only for illustrating the technical solutions of the present application, rather than limiting them; although the present application has been described in detail with reference to the foregoing embodiments, those skilled in the art should understand that they may still modify the technical solutions described in the foregoing embodiments, or equivalently substitute some or all of the technical features; and the modifications or substitutions do not make the essence of the corresponding technical solutions deviate from the scope of the technical solutions of the embodiments of the present application.

## Claims

1. A liquid crystal display (LCD) fingerprint recognition system, comprising an under-screen optical fingerprint recognition apparatus disposed under an LCD screen, a fingerprint detection area of the under-screen optical fingerprint recognition apparatus is at least partially located in a display area of the LCD screen; the under-screen optical fingerprint recognition apparatus comprises a fingerprint recognition module, which is disposed under a backlight module of the LCD screen and configured to receive fingerprint detection light which is formed by irradiating a finger above the fingerprint detection area by probe light emitted from a detection light source and carries fingerprint information; wherein a wavelength of the fingerprint detection light is different from a wavelength of backlight provided by the backlight module for displaying a picture, and at least part area of the backlight module is a light transmission area capable of transmitting the fingerprint detection light, so that the fingerprint detection light passes through the backlight module and is transmitted to the fingerprint recognition module under the backlight module.

2. The LCD fingerprint recognition system according to claim 1, wherein the fingerprint recognition module comprises an optical element and a fingerprint sensor, wherein the optical element is configured to guide or converge the fingerprint detection light transmitted through the backlight module to the fingerprint sensor, and the fingerprint sensor is configured to receive the fingerprint detection light to obtain the fingerprint information of the finger.

3. The LCD fingerprint recognition system according to claim 1, wherein the fingerprint sensor comprises an induction array, and an optical center of the optical element deviates from a center of the induction array of the fingerprint sensor or vertically aligned with a center of the induction array of the fingerprint sensor.

4. The LCD fingerprint recognition system according to claim 1, wherein the under-screen optical fingerprint recognition apparatus further comprises the detection light source, the probe light emitted from the detection light source is invisible light of a specific wavelength, and the backlight provided by the backlight module is visible light.

5. The LCD fingerprint recognition system according to claim 4, wherein the detection light source is disposed under the backlight module together with the fingerprint recognition module, and the detection light source is disposed at a periphery of the fingerprint recognition module or integrated inside the fingerprint recognition module.

6. The LCD fingerprint recognition system according to claim 4, wherein the LCD screen further comprises a display module having a protective cover plate and a liquid crystal panel, wherein the detection light source is disposed under an edge area of the protective cover plate.

7. The LCD fingerprint recognition system according to claim 4, wherein the invisible light of the specific wavelength is infrared light, the backlight module has a haze for the infrared light less than its haze for the visible light, and the backlight module has a reflectivity for the infrared light less than its reflectivity for the visible light.

8. The LCD fingerprint recognition system according to claim 5, wherein the backlight module comprises a light homogenizing film for performing light homogenizing processing on the visible light, which includes a film body and infrared transmission particles distributed on the film body, wherein the infrared transmission particles are used for increasing a penetration rate of the light homogenizing film for the infrared light.

9. The LCD fingerprint recognition system according to claim 8, wherein the light homogenizing film has a haze of greater than 90% for the visible light, and has a haze of less than 30% for the infrared light.

10. The LCD fingerprint recognition system according to claim 8, wherein the backlight module further comprises a reflective film for reflecting the visible light to the display module of the LCD screen; the reflective film comprises a reflective film body and a partial-penetration partial-reflection film layer formed on a surface of the reflective film body, wherein the partial-penetration partial-reflection film layer is configured to reflect the visible light and transmit the infrared light.

11. The LCD fingerprint recognition system according to claim 10, wherein the reflective film has a transmittance of greater than 90% for the infrared light, and has a transmittance of less than 10% for the visible light.

12. The LCD fingerprint recognition system according to claim 7, wherein the backlight module further comprises a brightness enhancement film for brightening the backlight provided by the backlight module, and the brightness enhancement film adopts a single layer prism film or a brightness enhancement film with a non-prism structure.

13. The LCD fingerprint recognition system according to claim 12, wherein the brightness enhancement film is a single layer prism film with a prism protrusion structure, and the prism protrusion structure comprises two prism bevels, wherein the fingerprint detection light is incident on the backlight module at an inclined angle and passes through the prism film from only one of the prism bevels of the prism protrusion structure.

14. The LCD fingerprint recognition system according to claim 13, wherein the two prism bevels of the prism protrusion structure are asymmetric prism bevels.

15. The LCD fingerprint recognition system according to claim 13, wherein the fingerprint recognition module comprises an optical element and a fingerprint sensor, wherein an optical center of the optical element deviates from a center of the induction array of the fingerprint sensor to enlarge a field of view of the fingerprint recognition module; wherein the optical element is configured to guide or converge the fingerprint detection light, which is incident at the inclined angle and passes through the backlight module, to the induction array of the fingerprint sensor.

16. The LCD fingerprint recognition system according to claim 15, wherein the optical element comprises a macro lens and a micropore aperture, wherein the macro lens is configured to cooperate with the micropore aperture to obtain an enlarged field of view of the fingerprint recognition module to expand effective area of the fingerprint detection area, and enable optical imaging of the fingerprint detection light at the fingerprint sensor.

17. The LCD fingerprint recognition system according to claim 16, wherein the fingerprint recognition module further comprises a visible light filter, wherein the visible light filter is disposed above the fingerprint sensor and configured to prevent the visible light from entering the fingerprint sensor, and a transmission wave band of the visible light filter covers the wavelength of the fingerprint detection light.

18. The LCD fingerprint recognition system according to claim 1, wherein the backlight module further comprises a steel plate for supporting and protecting an optical film of the backlight module; wherein the fingerprint recognition module is disposed under the steel plate, and the steel plate is provided with a first opening in a corresponding area of the fingerprint recognition module, wherein the first opening is configured to make the fingerprint detection light be transmitted through the steel plate into the fingerprint recognition module.

19. The LCD fingerprint recognition system according to claim 18, wherein the steel plate further comprises multiple second openings formed at a periphery of the first opening, and there are multiple detection light sources which are correspondingly disposed under the multiple second openings, wherein the second openings are configured to make the probe light emitted from the detection light source be transmitted through the steel plate and irradiate the finger above the LCD screen.

20. The LCD fingerprint recognition system according to claim 18, wherein the backlight module comprises a light guide plate, and the light guide plate comprises a backlight guide area and a transmission area, wherein the backlight guide area is configured to convert the visible light provided by the backlight source into planar light to illuminate the display module of the LCD screen, and the transmission area corresponds to a position of the fingerprint recognition module and is configured to transmit the fingerprint detection light to enable the fingerprint detection light to be transmitted to the fingerprint recognition module.

21. The LCD fingerprint recognition system according to claim 20, wherein the light guide plate comprises light guide particles, wherein a density of the light guide particles in the transmission area is smaller than a density of the light guide particles in the backlight guide area, or the light guide plate has no light guide particle in the transmission area.

22. The LCD fingerprint recognition system according to claim 1, wherein the backlight module further comprises a backlight source, wherein the backlight source is disposed in a backlight source area of the backlight module and configured to provide visible light to the backlight module, wherein the backlight source area is under a non-display area of the LCD screen, and the detection light source is disposed in the backlight source area together with the backlight source.

23. The LCD fingerprint recognition system according to claim 22, wherein the detection light source and the backlight source are linearly arranged in the backlight source area, and the detection light source and the backlight source are alternately spaced apart from each other in a position near the fingerprint detection area of the LCD screen and are connected to an external circuit through a same circuit board.

24. An under-screen optical fingerprint recognition apparatus, applicable to a liquid crystal display (LCD) screen having a display module and a backlight module, wherein a fingerprint detection area of the under-screen optical fingerprint recognition apparatus is at least partially located in a display area of the LCD screen; the under-screen optical fingerprint recognition apparatus comprises a fingerprint recognition module, which is disposed under the backlight module of the LCD screen and configured to receive fingerprint detection light which is formed by irradiating a finger above the fingerprint detection area by probe light emitted from a detection light source and carries fingerprint information; wherein a wavelength of the fingerprint detection light is different from a wavelength of backlight of the LCD screen for displaying a picture, and the fingerprint recognition module receives the fingerprint detection light through a light transmission area of the backlight module to obtain a fingerprint image of the finger, the light transmission area being capable of transmitting the fingerprint detection light.

25. The under-screen optical fingerprint recognition apparatus according to claim 24, wherein the fingerprint recognition module comprises an optical element and a fingerprint sensor, wherein the optical element is configured to guide or converge the fingerprint detection light transmitted through the backlight module to the fingerprint sensor, and the fingerprint sensor is configured to receive the fingerprint detection light to obtain the fingerprint information of the finger.

26. The under-screen optical fingerprint recognition apparatus according to claim 25, wherein the fingerprint sensor comprises an induction array, wherein the fingerprint detection light is incident on the backlight module at an inclined angle and passes through the backlight module, and an optical center of the optical element deviates from a center of the induction array of the fingerprint sensor to obtain an enlarged field of view and transmit the fingerprint detection light incident at the inclined angle to the induction array of the fingerprint sensor.

27. The under-screen optical fingerprint recognition apparatus according to claim 25, wherein an optical center of the optical element is vertically aligned with a center of the induction array of the fingerprint sensor.

28. The under-screen optical fingerprint recognition apparatus according to any one of claims 25 to 27, wherein the optical element comprises a macro lens and a micropore aperture, and the macro lens is configured to cooperate with the micropore aperture to obtain an enlarged field of view of the fingerprint recognition module to expand effective area of the fingerprint detection area, and enable optical imaging of the fingerprint detection light at the fingerprint sensor.

29. The under-screen optical fingerprint recognition apparatus according to claim 28, wherein the fingerprint recognition module further comprises a visible light filter, wherein the visible light filter is disposed above the fingerprint sensor and configured to prevent visible light from entering the fingerprint sensor, and a transmission wave band of the visible light filter covers the wavelength of the fingerprint detection light.

30. The under-screen optical fingerprint recognition apparatus according to claim 24, wherein the under-screen optical fingerprint recognition apparatus further comprises the detection light source, the probe light emitted from the detection light source is infrared light, and the backlight provided by the backlight module is visible light.

31. The under-screen optical fingerprint recognition apparatus according to claim 30, wherein the detection light source is disposed under the backlight module together with the fingerprint recognition module, and the detection light source is disposed at a periphery of the fingerprint recognition module or integrated inside the fingerprint recognition module.

32. The under-screen optical fingerprint recognition apparatus according to claim 30, wherein the detection light source is located under an edge area of a protective cover plate of the display module, wherein the detection light source is attached to a lower surface of the protective cover plate or is disposed at an internal support structure under the edge area of the protective cover plate.

33. The under-screen optical fingerprint recognition apparatus according to claim 30, wherein the backlight module has a haze for the infrared light less than its haze for the visible light, and the backlight module has a reflectivity for the infrared light less than its reflectivity for the visible light.

34. The under-screen optical fingerprint recognition apparatus according to claim 33, wherein the backlight module comprises a light homogenizing film for performing light homogenizing processing on the visible light, which includes a film body and infrared transmission particles distributed on the film body, wherein the infrared transmission particles are used for increasing a penetration rate of the light homogenizing film for the infrared light, so that the light homogenizing film has a haze of greater than 90% for the visible light, and has a haze of less than 30% for the infrared light.

35. The under-screen optical fingerprint recognition apparatus according to claim 33, wherein the backlight module further comprises a reflective film for reflecting the visible light to the display module of the LCD screen; the reflective film includes a reflective film body and a partial-penetration partial-reflection film layer formed on a surface of the reflective film body, wherein the partial-penetration partial-reflection film layer is configured to reflect the visible light and transmit the infrared light, so that the reflective film has a transmittance of greater than 90% for the infrared light, and has a transmittance of less than 10% for the visible light.

36. The under-screen optical fingerprint recognition apparatus according to claim 33, wherein the backlight module uses a single layer prism film with a prism protrusion structure as a brightness enhancement film, and the prism protrusion structure comprises two prism slopes, wherein the fingerprint detection light is incident on the backlight module at an inclined angle and passes through the prism film from only one of the prism bevels of the prism protrusion structure.

37. The under-screen optical fingerprint recognition apparatus according to claim 36, wherein the two prism bevels of the prism protrusion structure are asymmetric prism bevels.

38. The under-screen optical fingerprint recognition apparatus according to claim 33, wherein the backlight module further comprises a steel plate for supporting and protecting an optical film of the backlight module; wherein the fingerprint recognition module is disposed under the steel plate, and the steel plate is provided with a first opening in a corresponding area of the fingerprint recognition module, wherein the first opening is configured to make the fingerprint detection light be transmitted through the steel plate into the fingerprint recognition module.

39. The under-screen optical fingerprint recognition apparatus according to claim 38, wherein the steel plate further comprises multiple second openings formed at a periphery of the first opening, and there are multiple detection light sources which are correspondingly disposed under the multiple second openings, wherein the second openings are configured to make the probe light emitted from the detection light source be transmitted through the steel plate and irradiate the finger above the LCD screen.

40. The under-screen optical fingerprint recognition apparatus according to claim 33, wherein the backlight module comprises a light guide plate, and the light guide plate comprises a backlight guide area and a transmission area, wherein the backlight guide area is configured to convert the visible light provided by the backlight source into planar light to illuminate the display module of the LCD screen, and the transmission area corresponds to a position of the fingerprint recognition module and is configured to transmit the fingerprint detection light to enable the fingerprint detection light to be transmitted to the fingerprint recognition module.

41. The under-screen optical fingerprint recognition apparatus according to claim 40, wherein the light guide plate comprises light guide particles, wherein a density of the light guide particles in the transmission area is smaller than a density of the light guide particles in the backlight guide area, or the light guide plate has no light guide particle in the transmission area.

42. An electronic apparatus, comprising: a liquid crystal display (LCD) screen having a display module and a backlight module, and an optical fingerprint recognition apparatus disposed under the LCD screen, wherein the optical fingerprint recognition apparatus is the under-screen optical fingerprint recognition apparatus according to any one of claims 24 to 41.
